# DEMANDE DE BREVET EUROPEEN

(11) **EP 1 050 203 A1**
(43) Date de publication de la demande: **08.11.2000**
(21) Numéro de dépôt: 00460032.6
(22) Date de dépôt: 05.05.2000
(51) Int. Cl.: A01B 21/08

(54) **Pulverisateur en "v" a trains de disques reversibles**

(30) Priorité: 05.05.1999 FR 9905887
(71) Demandeur: Bouesnard, Georges, 56490 Mohon (FR)
(72) Inventeur: Bouesnard, Georges, 56490 Mohon (FR); Urien, Guenael, 56490 Mohon (FR)

(57) **Abrégé**

La présente invention concerne un pulvériseur à disques rotatifs qui comporte deux trains de disques bombés d'axe horizontal formant chacun un angle aigu (α) par rapport à la direction transversale (**Y Y'**), de sorte qu'ils forment un "V" dont la pointe est dirigée latéralement ; ce pulvériseur est remarquable par le fait que chacun des trains de disques (3 a, 3b) est articulé autour d'un axe (**Z Z'**) sensiblement vertical et qu'il peut occuper sélectivement deux positions angulairement décalées d'une valeur (π - 2 α) par pivotement, et uniquement par pivotement, autour de cet axe (**Z Z'**).

Machine agricole pour le travail du sol.

## Description

La présente invention concerne un pulvériseur à disques rotatifs.

Ce type de machine, généralement désignée "COVER-CROP" est une machine agricole adaptée pour être attelée à un tracteur, et destinée à l'ameublissement du sol, en particulier en vue d'un semis ultérieur.

Le pulvériseur comporte au moins un train de disques bombés, à bord coupant, dentelé ou non, d'axe horizontal. La série de disques est montée sur un essieu guidé en rotation dans des paliers à roulements solidaires du châssis, et le train de disques roule sur le sol au contact de celui-ci, en pénétrant plus ou moins dans le sol. La série de disques est bloquée en rotation sur l'essieu.

Le train de disques forme, vu de dessus, un angle aigu par rapport à la direction transversale de la machine.

La concavité des disques est dirigée vers l'avant, pour permettre à ces disques de "mordre" dans le sol au cours du travail.

En jouant sur la valeur de l'angle aigu mentionné plus haut, il est possible de faire varier le degré de pénétration et d'accrochage des disques dans le sol, pour s'adapter à la nature du terrain. En effet, les disques mordent dans le sol d'autant plus que ledit angle est élevé, cet angle étant à titre indicatif de l'ordre de 20° pour des conditions de travail normales.

Généralement, le train de disques peut être rabattu dans une position de rangement parallèlement, ou sensiblement parallèlement, à la direction longitudinale de la machine, de manière à réduire son encombrement en vue du transport.

On trouve essentiellement sur le marché deux catégories de pulvériseur, l'une dite en "V", et l'autre en "X".

Des pulvériseurs en "V" sont décrits par exemple dans les documents FR-A-1 543 363, FR-A-2 342 013, EP-A-0 544 556, EP-A-0 599 565 et EP-A-0 611 237.

Ce type de pulvériseur est ainsi communément désigné du fait qu'il comporte deux trains de disques qui forment un "V" dont la pointe est dirigée latéralement.

C'est à ce type de pulvériseur que s'adresse la présente invention.

Les pulvériseurs en "X" sont ainsi désignés du fait qu'ils comportent quatre trains de disques, répartis par paires ; la paire située à l'avant forme un "V" dont les branches sont situées du part et d'autre du plan longitudinal médian, et dont le sommet est tourné vers l'arrière.

La paire arrière forme également un "V" dont les branches sont disposées symétriquement de part et d'autre du plan longitudinal médian, et dont la pointe est dirigée vers l'avant.

Des pulvériseurs en "X" sont décrits par exemple dans les documents FR-A-1 491 496, FR-A-2 158 343, FR-A-2 758 228 et FR-A-2 735 649.

Chacun de ces deux types de pulvériseur possède ses propres avantages et inconvénients.

Le pulvériseur en "V" réalise un travail superficiel de qualité.

Cependant, ce type de machine permet de travailler seulement "en planches", mais non "à plat" c'est-à-dire en va-et-vient, avec demi-tour à chaque bout de champ.

En effet, le pulvériseur en "V" repousse la terre travaillée latéralement vers l'un des côtés de l'appareil, ce qui a pour effet de générer une rainure (petit fossé) dans le sol d'un côté et une nervure due à un surplus de terre (petit bourrelet) de l'autre côté.

Il est donc nécessaire de prévoir pour la machine une trajectoire dite en planches, dans laquelle des rangées voisines sont parcourues dans le même sens, de sorte que la rainure d'une rangée fraîchement parcourue soit comblée par la nervure de la rangée suivante.

Avec un pulvériseur en "X" on peut opérer "à plat" (en va-et-vient).

Cependant la disposition en "X" des trains de disques génère dans l'axe longitudinal médian un bourrelet central qui ne permet pas de réaliser un travail de bonne qualité.

Ce phénomène, couramment désigné "talutage", nécessite l'utilisation d'un disque additionnel destiné à assurer la finition de la zone centrale, qui permet dans une certaine mesure d'améliorer la qualité du travail, mais cette qualité est encore insuffisante.

L'objectif à la base de la présente invention est de proposer un pulvériseur en "V", permettant de travailler "à plat", comme avec les pulvériseurs en "X", sans altération de la qualité du travail de ce type de pulvériseur, et sans que les adaptations qui permettent d'atteindre cet objectif ne grèvent de manière importante le prix de revient ni la facilité d'utilisation de la machine.

La machine qui fait l'objet du document EP-A-0 599 565 précité est un pulvériseur en "V" dont les trains de disques sont réversibles, ce qui permet d'atteindre l'objectif sus-mentionné.

A cet effet, chacun des deux trains de disques est articulé autour d'un axe vertical et peut occuper sélectivement deux positions angulairement décalées, symétriques l'une par rapport à l'autre autour d'un plan transversal vertical.

Si on désigne par α l'angle que forme chaque train de disque par rapport à la direction transversale, la course de pivotement du train de disques pour passer d'une à l'autre de ces deux positions est par conséquent égale à 2 α .

La concavité de chacun des disques devant être nécessairement tournée vers l'avant, il est par conséquent nécessaire, avec un tel agencement, de permuter l'extrémité de la machine à laquelle est attelé le tracteur, ceci à chaque fois qu'on modifie la disposition du "V", c'est à dire à chaque extrémité de champ, entre deux courses aller et retour.

Pour cela, cette machine comporte deux timons distincts, qui sont utilisés alternativement.

On comprend qu'un tel agencement est difficilement acceptable pour l'agriculteur qui, à chaque fois qu'il arrive à l'extrémité d'une rangée (en bout de champ), est obligé de détacher la machine du tracteur, de la contourner, de se repositionner à l'autre extrémité pour s'y atteler à nouveau.

Le pulvériseur qui fait l'objet de l'invention ne présente pas cet inconvénient, la machine restant constamment attelée au tracteur par l'une seulement de ses extrémités, tout au long du travail.

La machine agricole qui est décrite dans le document WO-97/40660 comporte un train unique de disques rotatifs, celui-ci étant disposé obliquement par rapport à la direction transversale.

En arrière de ce train de disques se trouve un rouleau écraseur, disposé transversalement par rapport à l'axe longitudinal de la machine.

Cette machine est remarquable par le fait que si - comme précédemment-on appelle α l'angle aigu que forme le train de disques par rapport à la direction transversale, il est possible de le faire pivoter autour d'un axe vertical sur un angle de π - 2 α de manière à lui faire prendre sélectivement l'une ou l'autre de deux positions symétriques par rapport à une direction transversale, la concavité des disques étant toujours tournée vers l'avant, quelle que soit la position sélectionnée.

Avec cette machine il est donc possible de travailler "à plat".

Cette machine connue ne permet pas de travailler dans des conditions très satisfaisantes, du fait qu'il existe un seul train de disques, l'opération de travail du sol générant sur la machine un effort de déviation latéral ; avec une machine en "X" ou en "V" on ne rencontre pas cet inconvénient, du fait que les efforts transversaux sur les disques se compensent deux à deux.

La machine connue par le WO-97/40660 présente également l'inconvénient que le retournement du train de disques nécessite la mise en oeuvre d'une cinématique très complexe, combinant un mouvement de translation longitudinal et un pivotement du train de disques autour d'un axe vertical ; un tel agencement apparaît difficilement compatible avec la présence de deux trains de disques disposés l'un devant l'autre, comme c'est le cas pour les pulvériseurs en "V".

Le pulvériseur à disques rotatifs qui fait l'objet de la présente invention comporte, comme les dispositifs en "V" connus, deux trains de disques bombés d'axe horizontal formant chacun un angle aigu α par rapport à la direction transversale, de sorte qu'ils forment un "V" dont la pointe est dirigée latéralement.

L'invention est remarquable par le fait que chacun de ces trains de disques est articulé autour d'un axe sensiblement vertical et est adapté pour occuper sélectivement deux positions angulairement décalées d'une valeur égale à π - 2 α, ceci par pivotement, et uniquement par pivotement, autour de cet axe.

Par ailleurs selon un certain nombre de caractéristiques additionnelles, non limitatives de l'invention :
- Cet angle α est ajustable ;
- le pivotement des trains de disques est commandé par des vérins, par exemple hydrauliques ;
- la course de pivotement des trains des disques est calibrée au moyen de butées, de préférence réglables ;
- les trains de disques comprennent un seul essieu ;
- les trains de disques sont formés de plusieurs tronçons coaxiaux, articulés chacun autour de leur propre axe vertical ;
- chaque train de disques est composé d'une paire de tronçons coaxiaux situés latéralement, de part et d'autre du plan vertical longitudinal médian du pulvériseur ;
- chaque train de disques est composé de trois tronçons coaxiaux, à savoir un tronçon central et deux tronçons latéraux ;
- les tronçons latéraux peuvent être rabattus, en vue du transport, dans une position escamotée dans laquelle leur axe est sensiblement parallèle à l'axe longitudinal du pulvériseur ;
- l'essieu de chaque tronçon latéral est porté par une console assurant un décalage entre l'axe de l'essieu et l'axe d'articulation de la console, par exemple grâce à un montage pivotant, d'angle réglable, de l'essieu sur la console ;
- le centre des trains de disques, ou des tronçons de train de disques, se trouve en vis-à-vis de leur axe d'articulation ;
- le centre des trains de disques, ou des tronçons de train de disques, est déporté latéralement par rapport à leur axe d'articulation ;
- le pulvériseur comporte des organes de liaison cinématique assurant la synchronisation du pivotement des différents tronçons ;
- les axes d'articulation des trains de disques ou des tronçons de train de disques sont matérialisés par des arbres verticaux guidés en rotation dans le bâti du pulvériseur et dont l'extrémité inférieure porte des organes de support du train de disques, ou du tronçon, tandis que son extrémité haute est solidaire d'un moyen d'entraînement tel qu'un plateau horizontal connecté à un organe de commande tel qu'un vérin;
- le pulvériseur est de type semi-porté, et il comporte à l'avant un timon d'attelage et à l'arrière un train de roues transversal ;
- le pulvériseur fait office de semoir, son châssis supportant des moyens de stockage et de distribution de graines, qui alimentent une série de socs situés à l'avant du train de roues.

D'autres caractéristiques et avantages de l'invention apparaîtront de la description et des dessins annexés, sur lesquels :
- la figure 1 est une vue de dessous très schématique d'un pulvériseur qui fait l'objet d'un premier mode de réalisation possible de l'invention ;
- les figures 2 et 3 sont des vues simplifiées similaires à celle de la figure 1, illustrant le principe de sa réversibilité ;
- la figure 4 est un détail, en vue de dessus, du pulvériseur de la figure 1, qui représente les organes de commande du pivotement d'un train de disques ;
- la figure 5 est une vue analogue à la figure 4, représentant le système après pivotement du train de disques sur un angle de π -2 α par rapport à la position de la figure 4 ;
- la figure 6 est une vue de face schématique, avec coupes partielles, du dispositif de la figure 4 ;
- la figure 7 est une vue schématique, de dessous, d'un deuxième mode de réalisation possible de l'invention ;
- les figures 8 et 9 sont des schémas simplifiés et partiels du dispositif de la figure 7, montrant plusieurs positions possibles des tronçons de trains de disques équipant ce mode de réalisation ;
- les figures 10, 11 et 12 sont des vues de dessus schématiques et partielles, représentant les moyens de commande du pivotement de deux tronçons d'un même train de disques équipant le pulvériseur des figures 7 à 9 ;
- les figures 13 et 14 sont des représentations schématiques similaires aux vues des figures 1 et 7 respectivement, qui montrent des variantes de ces deux modes de réalisation, à déport latéral des trains ou des tronçons de train de disques ;
- les figures 15 et 16 sont des vues de dessus schématiques illustrant l'ajustage angulaire d'un tronçon de trains de disques ;
- la figure 17 est une vue de dessous schématique d'un troisième mode possible de l'invention ;
- la figure 18 est une vue de côté schématique d'une machine de travail combinée, comprenant un pulvériseur conforme à l'invention qui fait office de semoir.

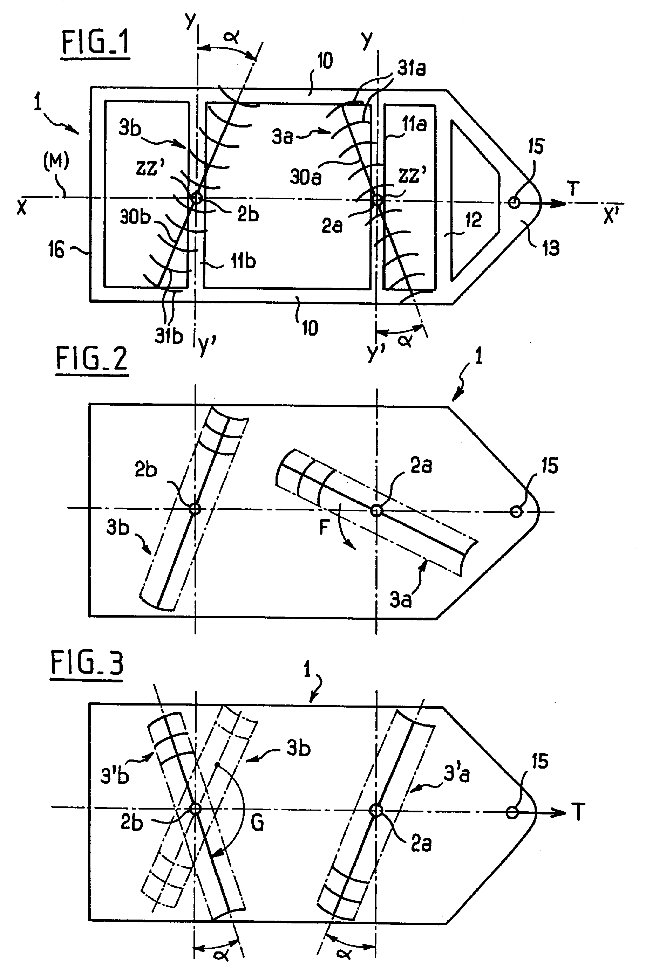

Le pulvériseur illustré sur les figures 1 à 3 comprend un châssis 1 composé de deux longerons latéraux 10 reliés par des traverses avant 12 et arrière 16, ainsi que par deux traverses intermédiaires 11a et 11b. La partie avant du châssis, référencée 13, fait office de timon pour un axe ou une rotule 15 destiné à permettre l'attelage de la machine à un tracteur agricole, la traction sur la machine - qui indique son sens de déplacement - étant symbolisée par la flèche **T**.

Le pulvériseur a une configuration générale symétrique par rapport à un plan longitudinal vertical médian **M**, l'axe de symétrie longitudinal horizontal étant désigné **X X'**, tandis que la direction transversale, perpendiculaire à **X X'**, est désignée **Y Y'**.

Les traverses intermédiaires avant 11a et arrière 11b portent chacune en leur zone centrale, dans le plan **M**, un axe vertical matérialisé par un arbre tournant 2a, respectivement 2b.

Le pulvériseur est équipé de deux trains de roues référencés 3a, 3b, qui sont solidaires des arbres verticaux 2a, respectivement 2b, auxquels ils sont suspendus.

Chacun des trains de disques 3a, 3b est composé d'un essieu 30a, respectivement 30b, sur lequel est montée une pluralité de disques régulièrement espacés tout le long de l'essieu.

Comme cela est bien connu, ces disques sont bombés, en forme d'assiettes, et ils sont portés par l'essieu 30 qui les supporte coaxialement.

Les deux essieux 30a, 30b s'étendent dans un plan horizontal ; ils sont inclinés par rapport à la direction transversale d'un angle aigu α, en sens inverse, de manière à former un "V" dont le sommet est dirigé latéralement vers l'un des côtés de la machine.

Sur la figure 1, le sommet est situé sur la droite de la machine si on considère son sens d'avancement **T** (cette vue étant, rappelons le, une vue de dessous).

A titre indicatif, l'angle α est de l'ordre de 20° (π/9).

De manière connue, cet angle est ajustable pour s'accommoder aux conditions de travail, et en particulier à la nature du terrain et de la culture concernée.

Comme on le voit sur la figure 1, la concavité des deux séries de disques 31a et 31b est tournée vers l'avant.

Conformément à l'invention, il est possible de faire pivoter les arbres verticaux 2a, 2b, et corrélativement les trains de disques 3a et 3b, ceci sur un angle égal à π - 2 α, soit 140° si α = 20° .

Le pivotement du train 3a est symbolisé par la flèche **F** sur la figure 2, tandis que le pivotement de l'autre train 3b est symbolisé par la flèche **G** sur la figure 3.

Dans l'exemple illustré, ces pivotements se font successivement, celui du train avant 3a se faisant avant celui du train arrière 3b.

Il est également possible de prévoir un pivotement simultané et synchronisé des deux trains 3a et 3b, l'important étant que ces deux pivotements se fassent sans interférence de ces deux éléments ; pour cela il est possible de jouer sur l'écartement mutuel des arbres 2a et 2b, en fonction de la longueur des trains de disques.

Après pivotement, les deux trains de disques, référencés 3'a, 3'b, occupent une position symétriquement inversée par rapport à celle de la figure 1.

En effet, la pointe du "V" se trouve maintenant sur la gauche de la machine.

Il est important d'observer que, dans cette position inversée, la concavité de l'ensemble des disques est à nouveau dirigée vers l'avant, ce qui permet de travailler par traction **T** dans le même sens que celui mis en oeuvre dans la situation précédente, de la figure 1.

Arrivé à l'extrémité du champ, l'agriculteur n'a donc pas à modifier le mode d'attelage.

Il lui suffit de faire pivoter les deux trains de disques de la position de la figure 1 à celle de la figure 3, ou inversement, pour pouvoir travailler, en sens inverse, sur une rangée adjacente à la rangée qu'il vient de traiter, ce qui correspond à un travail dit "à plat".

Les dimensions du pulvériseur, le diamètre et le nombre de disques sont fonction de la largeur de travail.

A titre indicatif chacun des trains est composé d'un nombre de disques compris entre quatorze et vingt, les essieux 30 ont une longueur de l'ordre de 2,50 m et les disques 31 ont un diamètre compris entre 400 et 800 mm.

Sur la plupart des schémas, on n'a pas représenté l'ensemble des disques équipant un train, ou un tronçon de train de disques ; seuls certains disques et notamment les disques d'extrémité ont été représentés, ce qui est suffisant pour indiquer l'orientation de leur concavité.

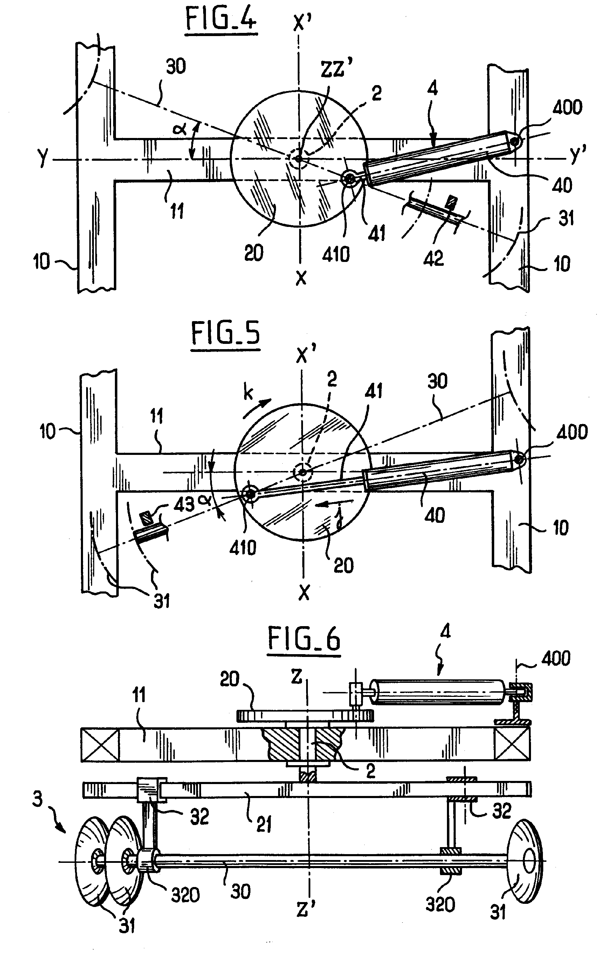

Les figures 4 à 6 montrent un mode de montage possible d'un train de disques 3. Ce montage est possible aussi bien pour le train avant portant l'indice a que pour le train arrière portant l'indice **b**, c'est pourquoi ces indices n'ont pas été indiqués sur ces figures.

L'essieu 30 du train de disques est supporté par une paire de paliers 320 qui sont solidaires de brides 32 pouvant coulisser longitudinalement sur une poutrelle 21 constituée par un profilé de section carrée disposé horizontalement au-dessus de l'essieu 30, parallèlement à celui-ci.

En son centre le profilé 21 est fixé à l'arbre 2, dont l'axe de rotation vertical est désigné **Z Z'** sur la figure 6.

L'arbre 2 est convenablement guidé en rotation dans la traverse 11, par des paliers de glissement ou de roulement appropriés ; l'extrémité basse de l'arbre 2 est solidaire de la poutrelle 21, tandis que son extrémité haute est solidaire d'un plateau circulaire 20, coaxial à l'arbre 2.

Sur la face supérieure de ce plateau à proximité de sont bord, est fixé un téton 410, d'axe vertical, auquel est fixé, de manière articulée, l'extrémité libre de la tige 41 d'un vérin hydraulique à double effet 4 ; le corps du vérin est référencé 40. Son extrémité opposée à la tige 41 est articulée par un axe 400 sur l'un des longerons 10 du bâti.

De manière connue, le vérin est alimenté en liquide hydraulique à partir du tracteur, via des conduites et une vanne appropriées, non représentées.

A la figure 4, le vérin est représenté dans sa position rétractée.

Dans cet état, l'essieu 30 forme un angle α par rapport à la direction transversale **Y Y'**.

Lorsque le vérin 4 est mis en extension, comme symbolisé par la flèche **j** sur la figure 5, il provoque la rotation du plateau 20, symbolisé par la flèche **k**, et corrélativement le pivotement en bloc de l'arbre 2, de la poutrelle 21, et du train de disques 3 suspendu à cette dernière.

La course d'extension du vérin est choisie pour correspondre à un pivotement sur une course angulaire de π - 2 α, si bien que le train de disques 3 occupe une position renversée par rapport à celle de la figure 4.

De préférence, des butées de fin de course 42, 43 contre lesquels l'essieu 30 vient en butée permettent de calibrer le pivotement de manière à obtenir les orientations bien définies et bien précises du train de disques dans chacune de ses deux positions sélectives.

Avantageusement, lesdites butées sont réglables de sorte qu'il est possible de faire varier la valeur de l'angle α.

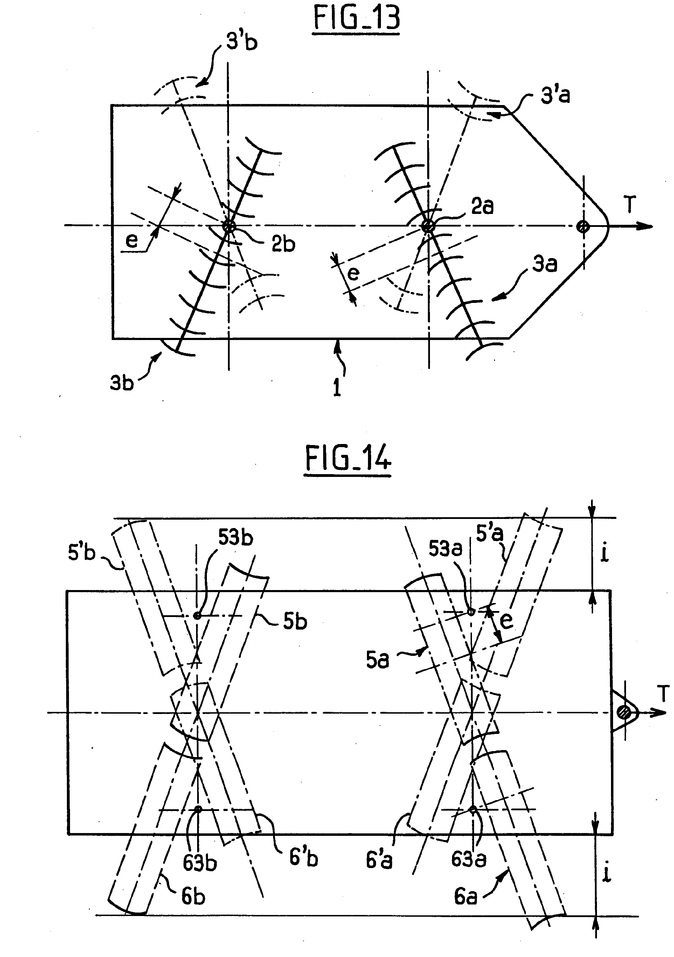

Avantageusement, les brides 32 sont montées coulissantes sur la poutrelle 21, de sorte qu'il est possible de déporter latéralement le train de disques 3 par rapport à l'axe de pivotement 2 ; cette possibilité sera expliquée ultérieurement, en référence à la figure 13.

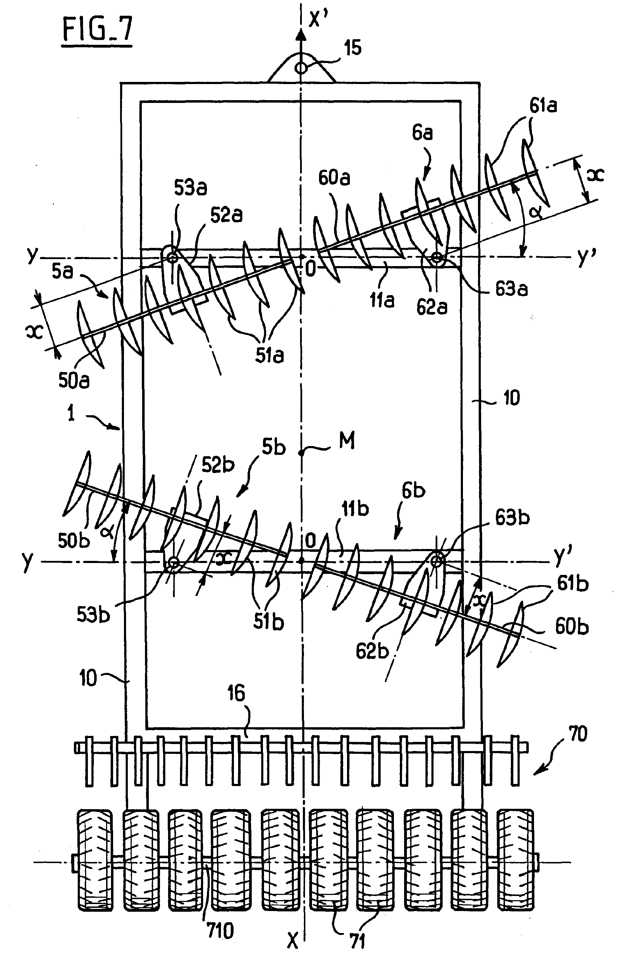

Le pulvériseur qui fait l'objet du second mode de réalisation de l'invention illustré à la figure 7 possède deux trains de disques constitués chacun de deux tronçons coaxiaux.

Comme précédemment, l'indice a a été affecté aux chiffres de référence du train avant, et l'indice b à ceux du train arrière.

Les deux tronçons d'un même train, désignés 5 et 6 sont coaxiaux et identiques ; ils possèdent des essieux 50, respectivement 60, de même longueur, et un nombre identique de disques 51, respectivement 61.

On a désigné par **O** le point d'intersection de l'axe commun aux deux tronçons du même train avec le plan **M**.

Chaque tronçon 5, 6 est supporté en sa zone centrale par une pièce en forme de console 52, respectivement 62, qui est articulée autour d'un axe vertical matérialisé par un arbre 53, respectivement 63, guidé en rotation dans la traverse 11.

Les axes des arbres 53 et 63 sont situés dans un plan vertical transversal passant par le point **O**. Les axes sont orthogaux, mais non concourants avec les axes des essieux 50, respectivement 60, étant excentrés par rapport à ces derniers d'une valeur référencée "**x**" sur la figure 7.

Les arbres d'articulation 53 et 63 sont situés sur le côté du bâti 1, à proximité des longerons 10 et, en position de travail, les deux trains de disques débordent légèrement sur les côtés du bâti 1.

Ce mode de réalisation est adapté en effet à des largeurs de travail sensiblement plus grandes qu'avec le premier mode de réalisation dans lequel chaque train de disques est unitaire. En effet, avec des trains unitaires de grande longueur il se pose un problème d'interférence lors de leur pivotement, sauf à utiliser une valeur d'écartement très élevée, et inacceptable, entre les axes 2a, 2b, comme cela se comprend à la simple observation de la figure 2.

L'ensemble est dimensionné de telle manière que, lorsque les deux trains de disques se trouvent dans leur position en "V", telle qu'illustrée sur la figure 7, les deux disques intérieurs voisins 51, 61 des deux tronçons du même train de disques sont espacés d'une valeur égale à l'écartement mutuel des disques sur un même tronçon.

Pour ce qui est du travail du sol, le résultat est donc le même que celui qui est réalisé au moyen de deux trains de disques unitaires.

On observera que sur le mode de réalisation de la figure 7, le bâti 1 se prolonge vers l'arrière et supporte, de l'avant vers l'arrière, d'une part une série de lames niveleuses 70 disposées transversalement et régulièrement espacées, et d'autre part une série de roues porteuses et d'aplanissement juxtaposées 71, dont l'essieu est référencé 710.

Les roues 71 sont par exemple des roues en caoutchouc montées folles sur l'essieu 710, l'ensemble constituant un rouleau transversal ayant une double fonction, à savoir d'une part, soutenir la partie arrière du pulvériseur, celui-ci étant par conséquent du type semi-porté, d'autre part de tasser le sol préalablement travaillé par les disques puis égalisé par les lames niveleuses 70.

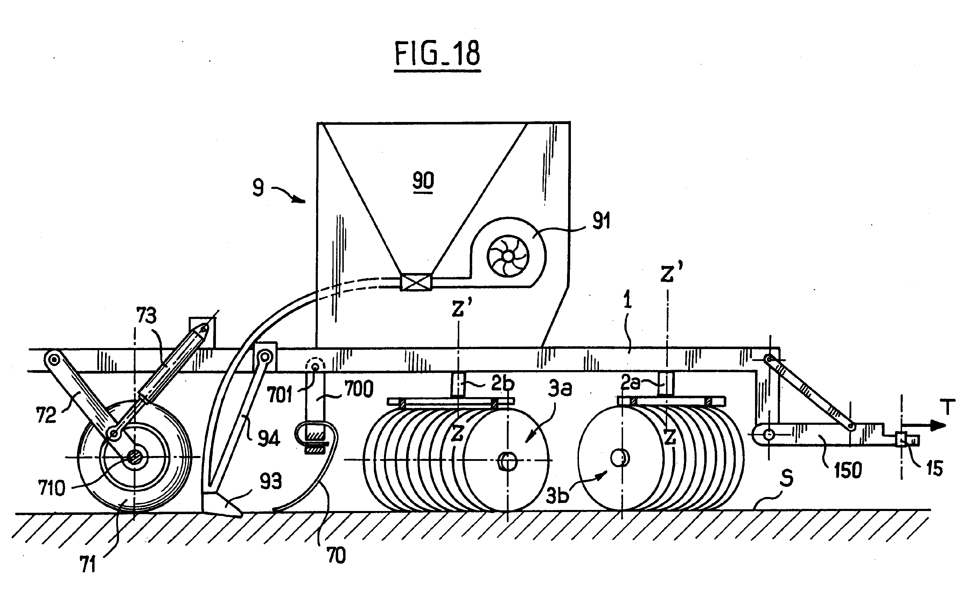

Comme on le verra en référence à la figure 18, les roues 71 sont avantageusement réglables en hauteur, ce réglage permettant de faire varier la pénétration des disques dans le sol lors du travail.

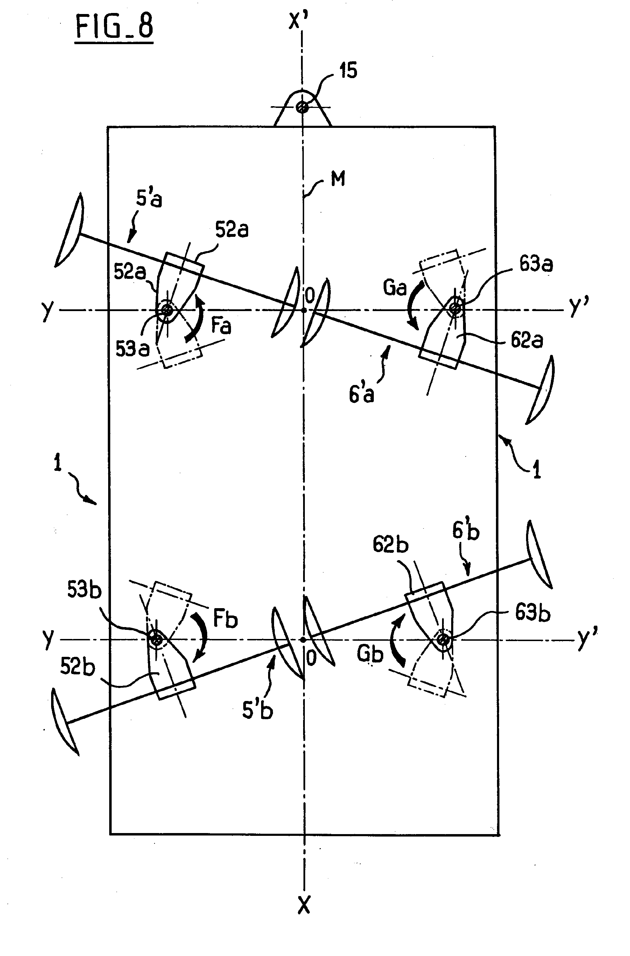

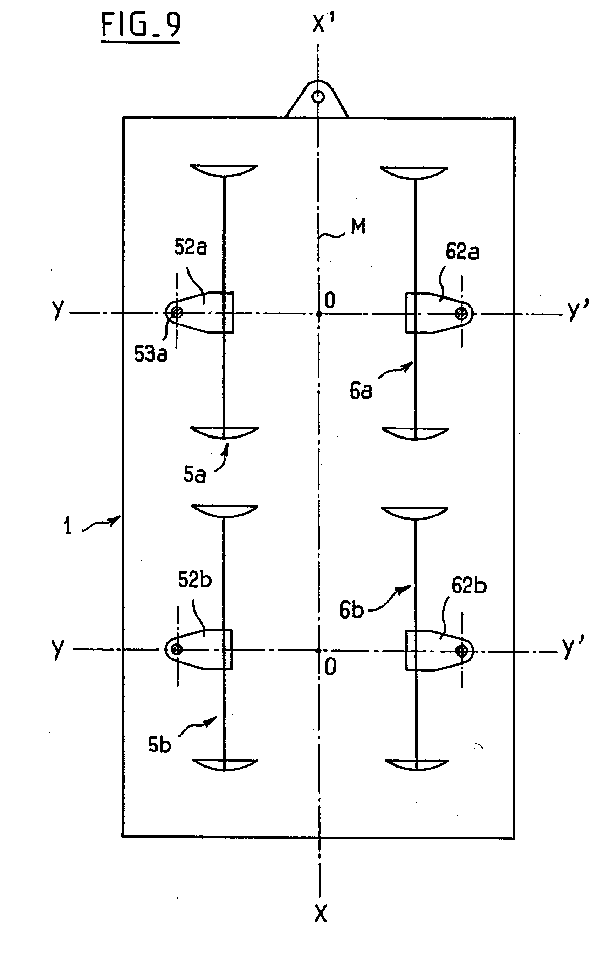

Pour ne pas compliquer inutilement les figures, les organes additionnels 70 et 71 n'ont pas été repris sur les schémas des figures 8 et 9.

La figure 8 permet de comprendre comment on fait pivoter chacun des quatre tronçons 5a, 5b, 6a, 6b d'un angle de π - 2 α autour des axes 53a, 53b, 63a, et respectivement 63b, pour les amener dans une position symétriquement inversée, dans laquelle les tronçons sont référencés 5'a, 5'b, 6'a et, respectivement 6'b.

Le sens de ces pivotements sont symbolisés sur la figure 8 par les flèches **Fa, Fb, Ga**, et, respectivement **Gb**.

Il convient de noter qu'il est possible d'obtenir, dans ce mode de réalisation, une configuration en "X". Pour cela, partant de la position de la figure 7, on fait pivoter seulement les tronçons 5a et 5b selon **Fa** et **Fb**, pour les amener dans la position de la figure 8, les deux autres tronçons 6a, 6b étant maintenus dans leur position initiale.

Il est également possible d'amener chacun des tronçons de train de disques dans une position escamotée, dans laquelle il est rabattu vers l'intérieur de la machine dans une position parallèle ou sensiblement parallèle à l'axe longitudinal **X X'.**

Cette position de rangement, qui est illustrée sur la figure 9, est utilisée lors du transport du pulvériseur sur la route, pour des raisons d'encombrement.

En effet, dans cet état, les disques ne débordent pas latéralement du châssis.

Il convient de signaler qu'un tel mode d'escamotage est connu en soi, par exemple par les EP-A-0 544 556 et EP-A-0 611 237 précités.

Divers moyens de commande du pivotement des tronçons des trains de disques peuvent être envisagés.

Le pivotement peut être réalisé par des moteurs ou des vérins hydrauliques ou pneumatiques, voire mécaniquement de manière manuelle.

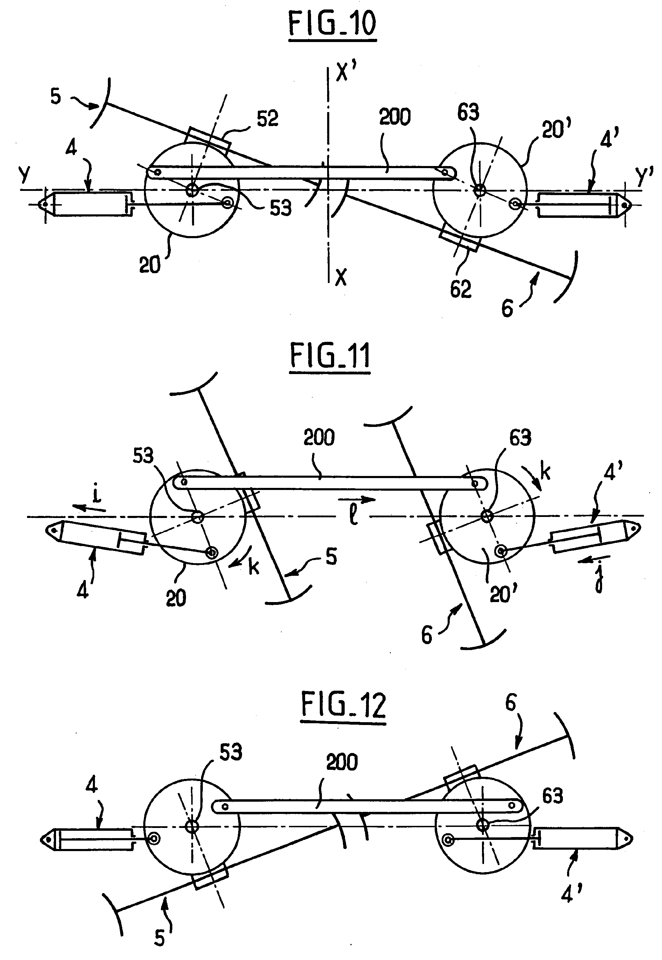

Un système de commande possible est représenté sur les figures 10 à 12.

Chaque tronçon 5 ou 6 est actionné par des moyens similaires à ceux des figures 4 à 6, relatifs à un train de disques unitaire.

Cependant, contrairement au système précédent, la zone centrale de chacun des tronçons 5, 6 ne se trouve pas à l'aplomb de l'arbre de pivotement correspondant 53, respectivement 63.

Elle se trouve à une certaine distance de celui-ci, par suite de l'interposition de la console de montage 52, respectivement 62.

Ce décalage est nécessaire pour que les deux tronçons se trouvent disposés coaxialement en position de travail, leur axe commun étant sécant - vu de dessus - à la fois avec l'axe longitudinal **X X'** et avec l'axe transversal **Y Y'** qui passe par les arbres verticaux 53, 63.

Les axes 53, 63 sont solidaires par leur extrémité basse de la pièce 52, respectivement 62, qui portent respectivement un tronçon 5, respectivement 6 et, par leur extrémité supérieure, d'un plateau circulaire 20, respectivement 20'.

Chacun de ces plateaux est actionné par un vérin hydraulique à double effet 4, respectivement 4', de la même manière que le plateau 20 de la figure 4, les mouvements de rétraction ou d'extension du vérin faisant tourner le plateau dans un sens ou dans l'autre, d'une amplitude angulaire égale à π - 2 α .

A l'observation de la figure 10 on constate que l'un des vérins (vérin 4) se trouve en extension alors que l'autre (vérin 4') se trouve à l'état rétracté.

On notera également une liaison cinématique entre les deux plateaux 20, 20' ; cette liaison se fait par l'intermédiaire d'une tige transversale 200 dont chacune des extrémités est articulée sur un téton porté par le plateau correspondant.

Cette liaison cinématique permet une bonne synchronisation des mouvements des deux plateaux et, corrélativement, des deux trains 5 et 6, lors de leur passage d'une position à l'autre, concomitamment.

Ces mouvements sont illustrés à la figure 11 qui montre la rétraction **i** et l'extension **j** simultanées des vérins 4 et 4', provoquant les rotations **k** des deux plateaux 20, 20', et la translation **l** en direction transversale de la tige de liaison 200.

La position retournée est représentée sur la figure 12.

La figure 13 illustre une situation dans laquelle chacun des deux trains de disques 3a, 3b est déporté latéralement, vers l'un des côtés du châssis 1, par rapport à l'axe de pivotement central.

La valeur du débord est désignée "**e**" sur la figure 13. Le travail en mode "déport" peut être utile dans certains conditions, notamment en cas de travail combiné avec un semis.

Naturellement, après retournement (inversion du "V") le débord se fait de l'autre côté du châssis.

La valeur du débord peut être obtenue et ajustée en faisant coulisser les brides 32 sur la tige 21 (voir figure 6).

Des organes de fixation appropriés sont naturellement prévus sur les brides 32 pour permettre de les bloquer et débloquer facilement sur la poutrelle 21 et pour les immobiliser en position souhaitée. Ces organes sont par exemple de simples vis de serrage.

La figure 14 représente un travail avec déport appliqué au seconde mode de réalisation de la figure 7.

On constate que chacun des deux tronçons 5, 6 du même train de disques est déporté latéralement du même côté du bâti, de sorte que l'un des tronçons dépasse largement d'une valeur **i** sur ce côté.

Après retournement des deux trains de disques, la même valeur de débord i se retrouve du côté opposé.

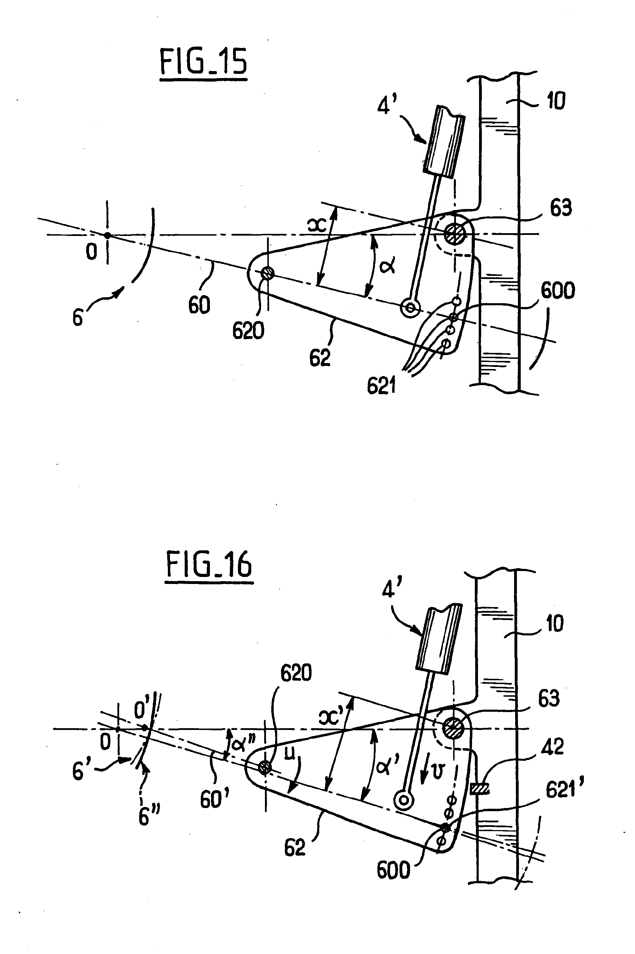

Les figures 15 et 16 représentent un mode de montage de l'un des tronçons de trains de disques, en l'occurrence un tronçon 6, avec lequel il est possible d'ajuster la valeur de l'angle α.

Pour cela, l'essieu 60 de ce tronçon est articulé par rapport à la console pivotante 62 autour d'un axe vertical 620. Une série de trous 621, disposés suivant un arc de cercle centré sur l'axe 620, est prévue pour recevoir sélectivement un doigt de blocage 600 solidaire du tronçon 6.

Les figures 15 et 16 montrent comment on passe d'un angle α à un angle α' supérieur à α en faisant usage d'un trou 621' décalé vers l'arrière par rapport au trou 621 préalablement utilisé pour le blocage, le pivotement de la console 62 autour de l'axe 620 étant symbolisé par la flèche **u** sur la figure 16.

Bien entendu, le décalage **x** entre l'axe de l'essieu 60 et l'axe de pivotement 63 varie corrélativement, pour devenir **x**'

Par suite de la variation de l'angle α, l'axe de l'essieu - référencé 60' - ne passe plus par le point médian **O**, mais par un point décalé latéralement, désigné **O**' sur la figure 16.

Il se pose par conséquent un problème de non coaxialité avec l'essieu du tronçon voisin non représenté, sur lequel le même réglage angulaire a, bien sûr, été réalisé.

Ce léger décalage n'est pas réellement gênant, et peut être acceptable pour le travail du sol.

Il est cependant possible de le compenser, par exemple en agissant sur la fin de course du vérin de commande 4'.

A cet effet, on met en extension le vérin 4' pour que la console 62 vienne en appui contre une butée réglable 42 portée par le châssis 10 et préalablement positionnée de manière appropriée, afin que l'extension **v** du vérin fasse pivoter légèrement en bloc la console 62 et le tronçon 6' autour de l'axe 63 jusqu'à faire passer l'axe de l'essieu 60' au point **O**.

La butée réglable 42, qui peut être de tout type connu, peut éventuellement assurer le verrouillage de la console dans la position souhaitée.

Le tronçon, désigné 6", forme alors un angle α" par rapport à la direction transversale, qui est légèrement plus petit que α', mais reste supérieur à α, et les deux tronçons d'une même paire sont parfaitement dans l'alignement l'un de l'autre.

On notera que, dans le mode de réalisation illustré, sur les figures 15-16, la console est directement entraînée par un vérin 4'.

Il va de soi qu'on pourrait faire usage d'un plateau intermédiaire, comme dans le système décrit précédemment, en référence aux figures 10 à 12.

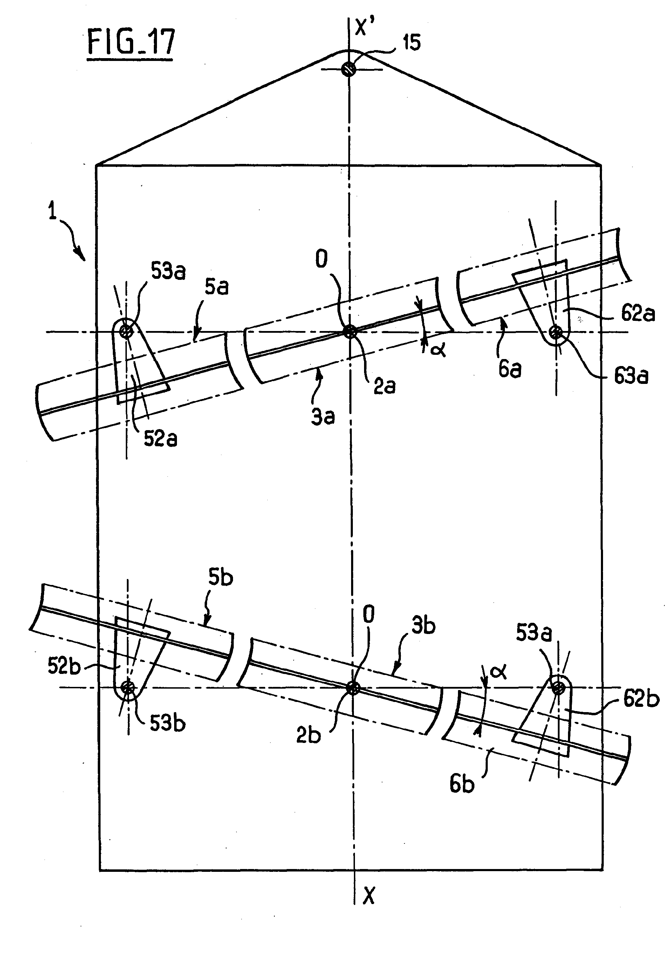

Dans le troisième mode de réalisation de la figure 17 chacun des deux trains de disques est subdivisé en trois tronçons, à savoir un tronçon central 3 et deux tronçons latéraux 5, 6.

L'agencement du tronçon central 3 est similaire à celui du premier mode de réalisation, son axe de rotation se trouvant au niveau de sa zone centrale. L'agencement des tronçons extérieurs 5, 6 est similaire à celui du deuxième mode de réalisation, chacun de ces tronçons étant porté par une pièce support 52, 62, elle-même articulée sur un arbre 53, respectivement 63.

Ce mode de réalisation est particulièrement adapté pour travailler sur une grande largeur.

Chacun des tronçons pivote de π - 2 α lorsqu'on passe, en bout de champ, d'une position de travail à la position de travail inversée.

En position de rangement les deux tronçons 3a, 3b sont avantageusement rabattus dans une position longitudinale, dans l'axe **X X'** de la machine, et les tronçons extérieurs 5a, 6a, 5b et 6b sont avantageusement rabattus vers l'intérieur, pour s'orienter également dans une direction longitudinale de manière analogue à celle illustrée à la figure 9.

Différents systèmes de commande peuvent être prévus pour provoquer le pivotement des différents tronçons 3, 5 et 6 ; des connexions cinématiques peuvent être également prévues entre ces différents tronçons, ou certains d'entre eux, pour assurer une bonne synchronisation des mouvements. Un seul moyen de commande peut être utilisé pour manoeuvrer plusieurs trains, ou tronçons de train, de disques, pourvu qu'ils soient cinématiquement reliés de manière appropriée.

Il convient de noter, par ailleurs, qu'en fonction de la position que l'on donne aux trains de disques, ces derniers vont tourner dans un sens ou dans l'autre au cours du travail.

Or, traditionnellement, il est associé à chaque disque un organe racleur, usuellement désigné "décrottoir" ou "rasette" dont le rôle est d'éliminer en permanence la terre, la boue et les débris susceptibles d'adhérer à sa face concave.

C'est pourquoi avec des disques réversibles selon l'invention, il est nécessaire d'équiper chaque disque soit d'une paire de racleurs, soit d'un racleur double agissant dans chacun des deux sens de rotation possible du disque.

Il est à noter qu'un tel agencement est connu en soi, notamment par le WO-97/40660 déjà cité (cf. figure 11 de ce document).

La figure 18 représente très schématiquement, une machine combinée, consistant en un pulvériseur semi-porté conforme à l'invention, à trains de disques réversibles, faisant également office de semoir.

Pour cela, le châssis 1 supporte un semoir 9, qui peut être de type connu ; dans l'exemple illustré il s'agit d'un semoir pneumatique pourvu d'une trémie 90 de réception et de stockage des graines à semer, et d'un générateur d'air comprimé 91 tel qu'une turbine ou un ventilateur.

De manière connue, le générateur d'air comprimé 91 achemine dans un flux d'air des grains prélevés dans la trémie 90, via des tubulures 92, vers un ensemble de socs semeurs 93 disposés à l'avant des roues d'appui 71, juste derrière les lames niveleuses 70.

L'ensemble des roues d'appui 71 est porté par des bras 72 articulés sur le bâti 1, et susceptibles de pivoter sous l'action de vérins hydrauliques 73.

Ceci permet d'abaisser ou de relever le train de roues 71 afin de faire varier, en fonction des conditions de travail, le degré de pénétration des disques dans le sol **S**.

Les lames niveleuses 70, de type connu, sont en acier à ressort et ont une forme générale en point d'interrogation, leur permettant de s'appliquer élastiquement convenablement contre le sol **S**, quel que soit le degré de relevage du train de roues d'appui 71.

Le support 700 des lames niveleuses 70 est articulé autour d'un axe 701 de manière à pouvoir être escamoté par relevage vers l'arrière, pour ne pas contrarier le débattement du train de disques arrière 3a lorsqu'on le fait pivoter d'une position de travail vers la position inversée. Ce relevage est avantageusement commandé par un vérin.

De préférence, les socs 93 sont portés par des tiges-support 94 articulées, susceptibles d'être rabattues vers le haut et vers l'avant lorsque la machine est rangée, dans un but de compacité.

De même, le timon d'attelage situé à l'avant, référencé 150, est également avantageusement articulé, afin de pouvoir être escamoté par pivotement.

## Revendications

1. Pulvériseur à disques rotatifs, qui comporte deux trains de disques bombés d'axe horizontal formant chacun un angle aigu (α) par rapport à la direction transversale (**Y Y'**), de sorte qu'ils forment un "V" dont la pointe est dirigée latéralement, caractérisé par le fait que chacun de ces trains de disques (3 ; 5-6 ; 5-3-6) est articulé autour d'un axe sensiblement vertical (**Z Z'**) et est adapté pour occuper sélectivement deux positions angulairement décalées d'une valeur (π - 2 α) par pivotement, et uniquement par pivotement, autour de cet axe (**Z Z'**).

2. Pulvériseur selon la revendication 1, caractérisé par le fait que ledit angle (α) est ajustable.

3. Pulvériseur selon la revendication 1 ou 2, caractérisé par le fait que le pivotement des trains de disques (3 ; 5-6 ; 5-3-6) est commandé par des vérins (40), par exemple hydrauliques.

4. Pulvérisateur selon l'une des revendications 1 à 3, caractérisé par le fait que la course de pivotement des trains des disques (3 ; 5-6 ; 5-3-6) est calibrée au moyen de butées (42, 43) de préférence réglables.

5. Pulvériseur selon l'une des revendications 1 à 4, caractérisé par le fait que les trains de disques (3) comprennent un seul essieu (30).

6. Pulvériseur selon l'une des revendications 1 à 4, caractérisé par le fait que les trains de disques sont formés de plusieurs tronçons ( 5-6 ; 5-3-6) coaxiaux, articulés chacun autour de leur propre arbre vertical (53-63 ; 53-2-63).

7. Pulvériseur selon la revendication 6, caractérisé par le fait que chaque train de disques est composé d'une paire de tronçons coaxiaux (5,6) situés latéralement, de part et d'autre du plan vertical longitudinal médian (**M**) du pulvériseur.

8. Pulvériseur selon la revendication 6, caractérisé par le fait que chaque train de disques est composé de trois tronçons coaxiaux (5, 3, 6), à savoir un tronçon central (3) et deux tronçons latéraux (5, 6).

9. Pulvériseur selon l'une des revendications 7 ou 8, caractérisé par le fait que les tronçons latéraux (5, 6) peuvent être rabattus, en vue du transport, dans une position escamotée dans laquelle leur axe est sensiblement parallèle à l'axe longitudinal (**X X'**) du pulvériseur.

10. Pulvériseur selon l'une des revendications 7 ou 8, caractérisé par le fait que l'essieu (50, 60) de chaque tronçon latéral (5, 6) est porté par une console (52, 62) assurant un décalage (x) entre l'axe de l'essieu et l'axe d'articulation de la console, la valeur de ce décalage (x) étant ajustable.

11. Pulvériseur selon l'une des revendications 1 à 10, caractérisé par le fait que le centre des trains de disques, ou des tronçons de train de disques, se trouve en vis-à- vis de leur axe d'articulation.

12. Pulvériseur selon l'une des revendications 1 à 11, caractérisé par le fait que le centre des trains de disques, ou des tronçons de train de disques, est déporté latéralement par rapport à leur axe d'articulation.

13. Pulvériseur selon la revendication 6, caractérisé par le fait qu'il comporte des organes de liaison cinématique (20-200-20') assurant la synchronisation du pivotement des différents tronçons (5, 6).

14. Pulvériseur selon l'une des revendications précédentes, caractérisé par le fait que les axes d'articulation des trains de disques ou des tronçons de train de disques sont matérialisés par des arbres verticaux (2 ; 53 ; 63) guidés en rotation dans le bâti (1) du pulvériseur et dont l'extrémité inférieure porte des organes (21, 32) de support du train de disque-, ou du tronçon, tandis que son extrémité supérieure est solidaire d'un moyen d'entraînement tel qu'un plateau horizontal (20) connecté à un organe de commande tel qu'un vérin (4).

15. Pulvériseur selon l'une des revendications précédentes, caractérisé par le fait qu'il est du type semi-porté; et qu'il comporte à l'avant un timon d'attelage (150) et à l'arrière un train de roues transversal (71).

16. Pulvériseur selon la revendication 14, caractérisé par le fait qu'il fait office de semoir, son châssis (1) supportant des moyens de stockage (90) et de distribution (91-92) de graines, qui alimentent une série de socs (93) situés à l'avant du train de roues (71).
